(19) Europäisches Patentamt

European Patent Office

Office européen des brevets

(11) **EP 1 037 440 A2**

(12) **EUROPEAN PATENT APPLICATION**

(43) Date of publication:
**20.09.2000 Bulletin 2000/38**

(51) Int. Cl.⁷: **H04L 27/26**

(21) Application number: **00105333.9**

(22) Date of filing: **16.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **18.03.1999 JP 7293199**

(71) Applicant:
**MATSUSHITA ELECTRIC INDUSTRIAL CO., LTD.
Kadoma-shi, Osaka 571-8501 (JP)**

(72) Inventors:
• **Satou, Kazuhiko
Hirakarashi, Osaka 573-0171 (JP)**
• **Furukawa, Hiroki
Osakashi, Osaka 534-0016 (JP)**

(74) Representative:
**Schwabe - Sandmair - Marx
Stuntzstrasse 16
81677 München (DE)**

(54) **Null symbol detecting device**

(57) A null signal detecting device, wherein when digital information is transmitted via a plurality of frame signals, a null signal is inserted between each of the frame signals to identify each of the frame signals. The null signal has an amplitude smaller than that of each of the plurality of frame signals. The plurality of frame signals and the null signals are subjected to frequency division to generate a plurality of carrier waves which are then modulated. The plurality of modulated carrier waves are transformed into an RF signal which is then transmitted as digital information. The null signal is detected by demodulating the RF signal. The null signal detecting device includes a frequency transformer section for transforming the RF signal into a signal having an intermediate frequency $f_C$; a band pass filter section for receiving an output signal from the frequency transformer section and extracting a signal having a frequency band width $f_B$ around the intermediate frequency $f_C$ such that the plurality of modulated carrier waves are included therein; a null signal detector filter section including a filter, which has a narrower bandwidth around the intermediate frequency $f_C$ than the bandwidth $f_B$, for subjecting an output signal of the band pass filter section to band restriction; and a null signal detector section for detecting as a null signal an output signal of the null signal detector filter section which has an amplitude substantially smaller than the average amplitude of output signals of the null signal detector filter section.

EP 1 037 440 A2

**Description**

BACKGROUND OF THE INVENTION

1. FIELD OF THE INVENTION:

The present invention relates to a null signal detecting device for use in a digital transmission system where a signal, which includes frames and a null signal inserted between each frame, is transmitted, and for correctly detecting a null signal of the desired channel regardless of influences of the signal amplitude of adjacent channels.

2. DESCRIPTION OF THE RELATED ART:

Recently, orthogonal frequency division multiplex (OFDM) has been utilized in digital information transmission systems. In OFDM, a number of carrier waves which are orthogonal to each other are used in a transmission band. Each carrier wave is digitally modulated using QPSK or QAM. Digital information including audio data is transmitted in frames. The modulated carrier wave is transformed into a radio frequency (RF) signal to be transmitted.

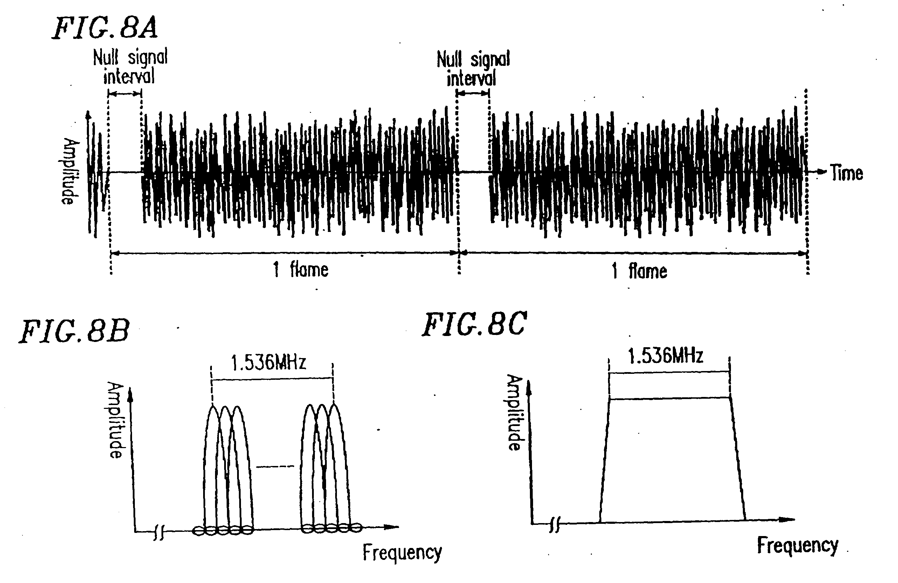

In Europe, so-called digital audio broadcasting (DAB) with OFDM has come into service. Figure **8A** shows a relationship between the amplitude and time of an OFDM signal in DAB. Each frame includes a leading portion which has a sufficiently lower level of signal amplitude compared with the other portion of the frame. This leading portion is referred to as a null signal. This null signal is detected by a receiver and the detected null signal is provided for synchronization of frame reception. The OFDM signal includes a number of carrier waves, each of which has a spectrum as shown in Figure **8B**. All the carrier waves exist in a band having a bandwidth $f_B$ of 1.536 MHz, resulting in an overall spectrum shape as shown in Figure **8C**.

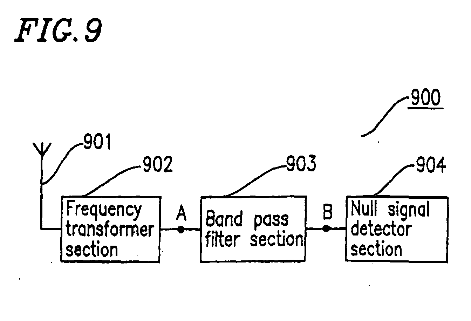

An operation and configuration of a conventional null signal detecting device will be described below. Figure **9** is a conventional null signal detecting device **900**. The null signal detecting device **900** includes a receiving antenna **901**, a frequency transformer section **902**, a band pass filter section **903**, and a null signal detector section **904**. When a digital information receiving apparatus including the null signal detecting device **900** is carried in a moving object such as a vehicle, the receiving antenna **901** may be provided on the moving body. The frequency transformer section **902** transforms a radio frequency signal received by the receiving antenna **901** into a modulated carrier wave signal having an intermediate frequency signal. The band pass filter section **903** passes only a band signal including the desired channel among the output signals of the frequency transformer section **902**. Specifically, the band pass filter section **903** passes signals having a frequency $(f_C - f_B/2)$ to $(f_C + f_B/2)$ where

$f_C$ is a center frequency. A surface acoustic wave (SAW) filter is typically used as the frequency transformer section **902**. The null signal detector section **904** is a circuit for detecting a null signal from the outputs of the band pass filter section **903**. For example, the null signal detector section **904** includes a rectifier, a low pass filter, and an integrator. The null signal detector section **904** obtains the envelope of the power of the output signal of the band pass filter section **903** to detect a portion of the signal having a small power as a null signal.

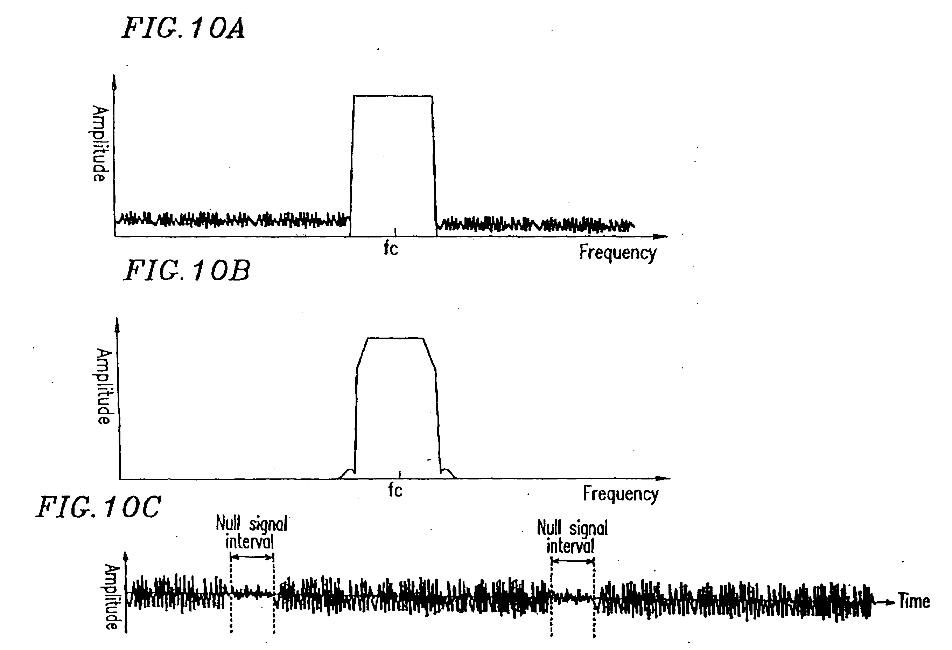

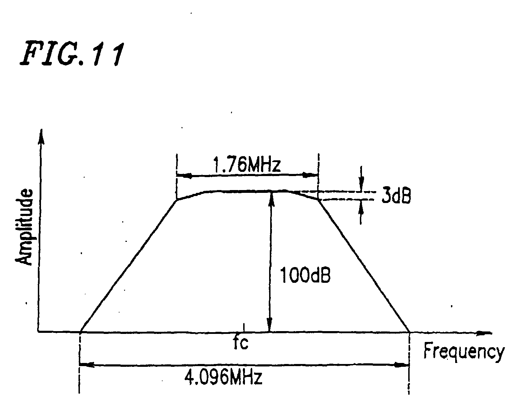

The conventional null signal detecting device so constructed will be described below in terms of operation. A radio frequency signal is received by the receiving antenna **901** and is then transformed into an intermediate frequency signal having the center frequency of $f_C$ by the frequency transformer section **902**. As a result, a signal at point A in Figure **9** has a spectrum as shown in Figure **10A**. As shown in Figure **10A**, unnecessary signals slightly remain in bands other than an intermediate frequency band. When an intermediate frequency signal having a center frequency $f_C$ is input to the band pass filter section **903**, the SAW filter limits the signal to a band having a frequency characteristic as shown in Figure **11**. This frequency characteristic of the SAW filter is such that the bandwidth is about 1.76 MHz where the attenuation is about 3 dB or less, and the bandwidth is about 4.096 MHz where the attenuation is about 100 dB or less. A signal at point B which has been subjected to the SAW filter having such a characteristic has a spectrum as shown in Figure **10B** where substantially no unnecessary signal remains in bands other than the intermediate frequency region. In this case, the relationship between the amplitude and time of the signal at point B is as shown in Figure **10C** where the interval of a frame signal is significantly different in signal level from the interval of a null signal. This is, however, a signal waveform where there are no adjacent channels.

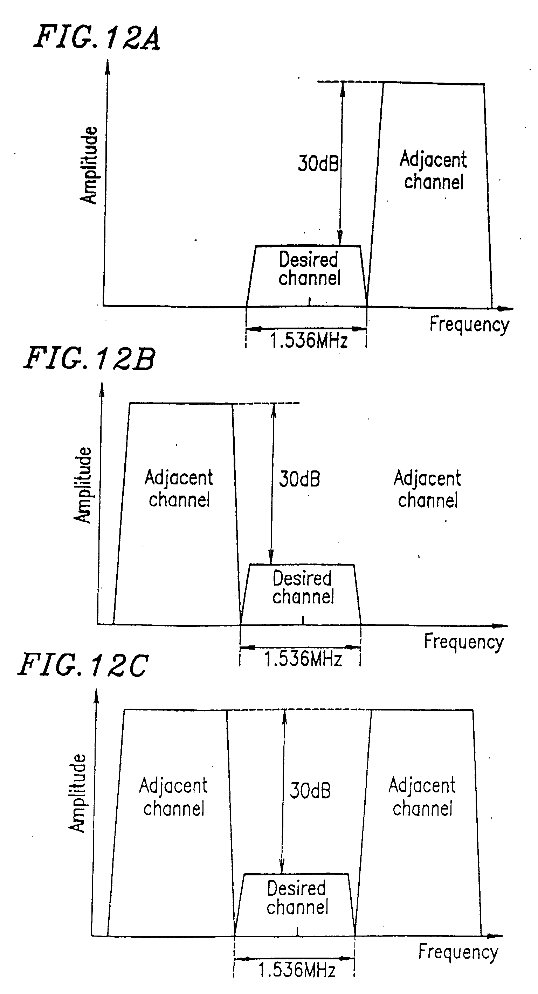

An area with DAB coverage has a plurality of broadcasting stations. There are a plurality of transmission channels according to the number of stations. At some receiving positions of DAB, the desired transmission channel may be adjacent to other transmission channels. Correct reception is required in DAB even when there is an adjacent channel which has a higher amplitude by about 30 dB than the desired channel. Figures **12A** to **12C** show frequency spectra where there are one or two adjacent channels which are 30 dB higher in amplitude. Figure **12A** shows the case where an adjacent channel which is 30 dB higher in amplitude exists on the upper-frequency side of the desired channel. Figure **12B** shows the case where an adjacent channel which is 30 dB higher in amplitude exists on the lower-frequency side of the desired channel. Figure **12C** shows the case where an adjacent channel which is 30 dB higher in amplitude exists on each side of the desired channel. In Figures **12A** to **12C**, each channel has a bandwidth of 1.536 MHz.

Conventionally, a received radio frequency signal is subjected to band restriction for demodulation. However, a SAW filter having a given frequency characteristic cannot always eliminate adjacent channels.

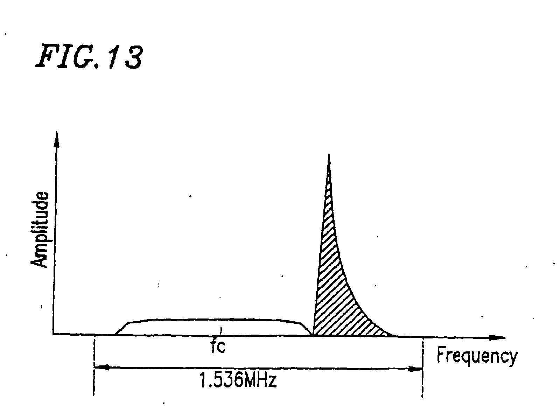

The conventional null signal detecting device shown in Figure **9** may fail to detect a null signal due to a remaining portion of the adjacent channel. An example will be given of this case. Assume that there is a channel adjacent to the upper-frequency side of the desired channel and the adjacent channel is 30 dB higher in amplitude than that of the desired channel as shown in Figure **12A**. A radio frequency signal is received by the receiving antenna **901** and is transformed into an intermediate frequency band having a center frequency $f_C$ by the frequency transformer section **902**. Next, the band pass filter Section **903** having a frequency characteristic shown in Figure **11** subjects the intermediate frequency signal to band restriction so as to pass a signal of the desired channel. As a result, the signal at point B of Figure **9** has a spectrum as shown in Figure **13**. Here, there remains signal components of the adjacent channel which could not have been eliminated by the band pass filter section **903** (shown by a hatched portion in Figure **13**). The amount of the remaining signal components of the adjacent channel varies depending on the frequency characteristic of the band pass filter section **903**. In particular, when the frequency band of the adjacent channel is broad, there are many remaining signal components of the adjacent channel. As a result, the output of the band pass filter section **903** includes more signal components of the adjacent channel than those of the desired channel.

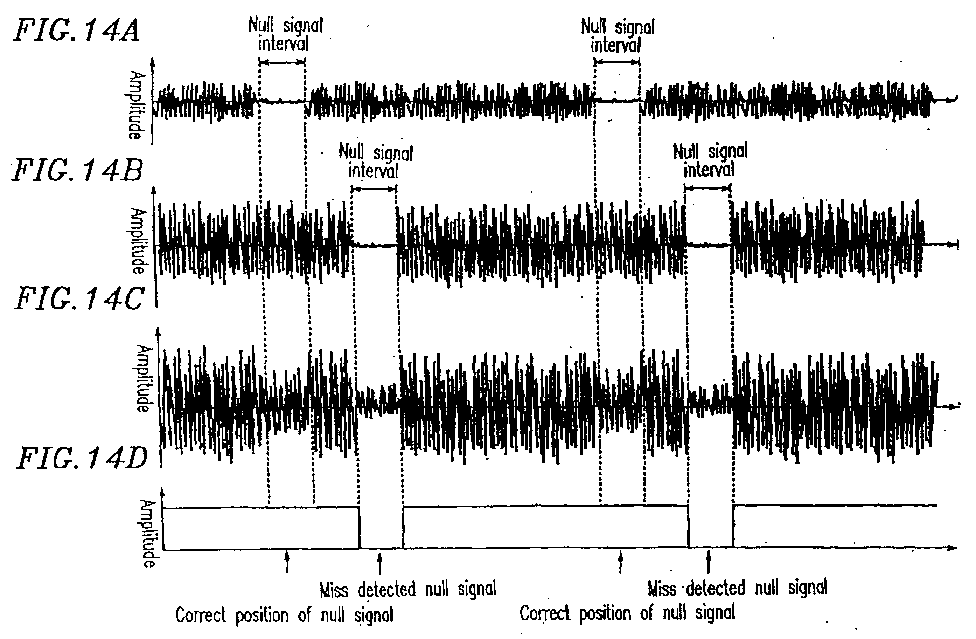

Figures **14A** to **14D** each show a relationship between the amplitude and time of the desired channel and/or an adjacent channel at point B in Figure **9**. Figure **14A** shows the desired channel alone. Figure **14B** shows the adjacent channel alone. Figure **14C** shows a composite wave of the desired channel and the adjacent channel. This composite wave is the output signal of the band pass filter section **903**. As shown in Figure **14**, when the desired channel and the adjacent channel are not synchronized with each other, the null signal of the desired channel will have a position different from that of the adjacent channel with respect to the time axis. Thus, the relationship of the amplitude and time of an actual received signal is as shown in Figure **14C**. As a result, the null signal detector section **904** erroneously detects a null signal at the null signal position of the adjacent channel instead of the null signal position of the desired channel. Thus, a null signal cannot be detected at the null signal position of the desired channel. Typically, channels are not synchronized with each other. When there is an adjacent channel having a high amplitude signal, the null signal of the desired channel cannot be correctly detected.

SUMMARY OF THE INVENTION

According to one aspect of the present invention, a null signal detecting device, in which when digital information is transmitted via a plurality of frame signals, a null signal is inserted between each of the plurality of frame signals to identify each of the plurality of frame signals; the null signal has an amplitude smaller than that of each of the plurality of frame signals; the plurality of frame signals and the null signals are subjected to frequency division to generate a plurality of carrier waves; the plurality of carrier waves are modulated; the plurality of modulated carrier waves are transformed into an RF signal; the RF signal is transmitted as the digital information; and the null signal is detected by demodulating the RF signal, includes a frequency transformer section for transforming the RF signal into a signal having an intermediate frequency $f_C$; a band pass filter section for receiving an output signal of the frequency transformer section and extracting a signal having a frequency band width $f_B$ around the intermediate frequency $f_C$ such that the plurality of modulated carrier waves are included therein; a null signal detector filter section including a filter for subjecting an output signal of the band pass filter section to band restriction, the filter having a narrower bandwidth around the intermediate frequency $f_C$ than the bandwidth $f_B$; and a null signal detector section for detecting as a null signal an output signal of the null signal detector filter section which has an amplitude substantially smaller than the average amplitude of output signals of the null signal detector filter section.

In one embodiment of this invention, the null signal detector filter section has a bandwidth around an intermediate frequency $f_C$. The bandwidth is sufficiently narrow that an adjacent channel is eliminated.

In one embodiment of this invention, the null signal detector filter section includes a band pass filter which passes only an output signal of the frequency transformer section which has a bandwidth $f_B - xf_B$ (where x is equal to or greater than zero and less than one) around the intermediate frequency $f_C$.

In one embodiment of this invention, the null signal detector filter section includes a notch filter which does not pass an output signal of the frequency transformer section which has a bandwidth around $(f_C - f_B y/2)$ and around $(f_C + f_B y/2)$ (where y is in a range between about 1.0 and about 1.3).

According to another aspect of the present invention, a null signal detecting device, in which when digital information is transmitted via a plurality of frame signals, a null signal is inserted between each of the plurality of frame signals to identify each of the plurality of frame signals; the null signal has an amplitude smaller than that of each of the plurality of frame signals; the plurality of frame signals and the null signals are subjected to frequency division to generate a plurality of carrier waves; the plurality of carrier waves are modulated; the plurality of modulated carrier waves are transformed into an RF signal; the RF signal is transmitted as the digital information; and the null signal is detected by demodulating the RF signal, includes a frequency transformer section for transforming the RF signal into a signal having an intermediate frequency $f_C$; a band pass filter section for receiving an output signal of the frequency transformer section and extracting a signal having a frequency band width $f_B$ around the intermediate frequency $f_C$ such that the plurality of modulated carrier waves are included therein; an orthogonal demodulator section for receiving an output signal of the band pass filter section, transforming the output signal of the band pass filter section into the modulated carrier wave and transforming the modulated carrier wave into a baseband signal based on the phase of the modulated carrier wave; a null signal detector filter section including a filter for subjecting an output signal of the orthogonal modulator to band restriction, the filter having a narrower bandwidth than a bandwidth between $-f_B/2$ and $f_B/2$; and a null signal detector section for detecting as a null signal an output signal of the null signal detector filter section which has an amplitude substantially smaller of the average amplitude of output signals of the null signal detector filter section.

In one embodiment of this invention, the null signal detector filter section has a bandwidth which is sufficiently narrow that an adjacent channel is eliminated.

In one embodiment of this invention, the null signal detector filter section includes a low pass filter.

In one embodiment of this invention, the null signal detector filter section includes a band pass filter which passes only an output signal of the frequency transformer section which has a frequency between $-(f_B/2-xf_B/2)$ and $+(f_B/2-xf_B/2)$ (where x is equal to or greater than zero and less than one) around the intermediate frequency $f_C$.

In one embodiment of this invention, the null signal detector filter section includes a notch filter which does not pass an output signal of the frequency transformer section which a bandwidth around a frequency $-f_By/2$ and a bandwidth around a frequency $+f_By/2$ (where y is in a range between about 1.0 and about 1.3).

Thus, the invention described herein makes possible the advantages of providing a null signal detecting device which can appropriately detect the null signal of the desired channel even when there is an adjacent channel having a signal amplitude higher than that of the desired signal.

These and other advantages of the present invention will become apparent to those skilled in the art upon reading and understanding the following detailed description with reference to the accompanying figures.

BRIEF DESCRIPTION OF THE DRAWINGS

Figure **1** is a block diagram showing a configuration of a null signal detecting device according to Example 1 of the present invention.

Figure **2A** is a diagram for explaining a frequency characteristic of a band pass filter section used as a null detector filter of Example 1.

Figure **2B** is a diagram for explaining a frequency characteristic of an output signal of the band pass filter section in Example 1.

Figures **3A** to **3D** are signal waveform diagrams for explaining detection of a null signal in Example 1.

Figure **4A** is a diagram for explaining a frequency characteristic of a notch filter used as a null signal detector filter of Example 1.

Figure **4B** is a diagram for explaining a frequency characteristic of an output signal of the notch filter in Example 1.

Figure **5** is a block diagram showing a configuration of a null signal detecting device according to Example 2 of the present invention.

Figure **6** is a diagram for explaining the frequency distribution of an I signal output from an orthogonal demodulator section of Example 2 when an adjacent channel has a high-amplitude signal.

Figure **7A** is a diagram for explaining a frequency characteristic of a low pass filter used as a null signal detector filter of Example 2.

Figure **7B** is a diagram for explaining a frequency characteristic of an output signal of the low pass filter in Example 2.

Figure **8A** is a diagram for explaining a signal waveform in DAB.

Figures **8B** and **8C** are diagrams for explaining the frequency characteristic of a transmission channel in DAB.

Figure **9** is a block diagram showing a configuration of a conventional null signal detection device.

Figures **10A** to **10C** are diagrams for explaining the output signal of each block in the conventional null signal detecting device shown in Figure **9**.

Figure **11** is a diagram for explaining a frequency characteristic of an SAW filter used as a band pass filter section.

Figures **12A** to **12C** are diagrams for explaining a frequency spectrum around a transmission channel when an adjacent channel has a high-amplitude signal.

Figure **13** is a diagram for explaining a frequency characteristic of an output signal of a band pass filter section when an adjacent channel has a high-amplitude signal.

Figures **14A** to **14D** are diagrams for explaining a relationship between the amplitude and time of a DAB signal when an adjacent channel has an amplitude higher than that of the desired channel.

Figure **15A** is a diagram for explaining a frequency characteristic of a notch filter used as a null detector filter of Example 2.

Figure **15B** is a diagram for explaining a frequency characteristic of an output signal of the notch filter in Example 2.

DESCRIPTION OF THE PREFERRED EMBODIMENTS

(Example 1)

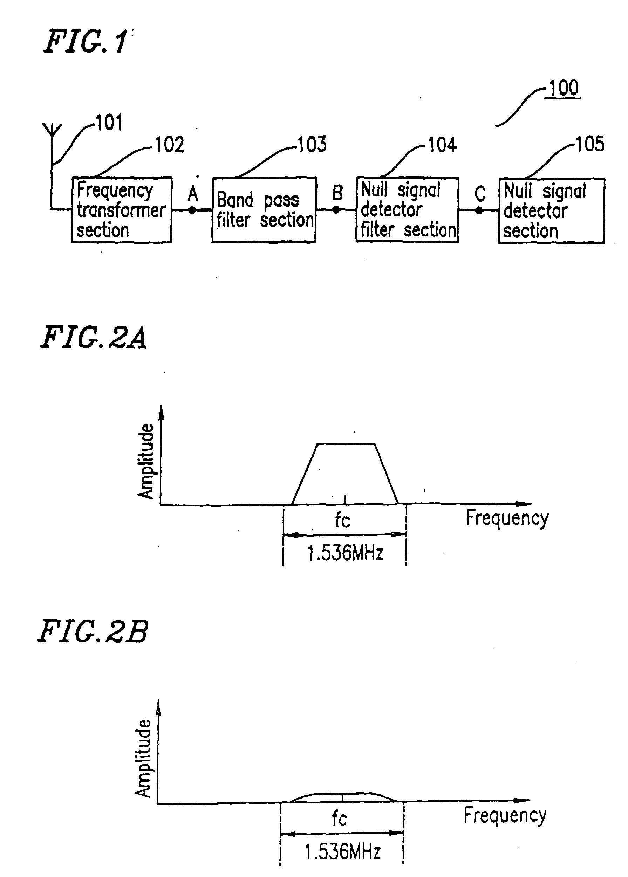

A null signal detecting device according to Example 1 of this invention will be described below with reference to the accompanying drawings. Figure **1** is a block diagram showing a configuration of a null signal detecting device **100** according to Example 1 of this invention. Similar to the above-described conventional device, the device **100** includes a receiving antenna **101**, a frequency transformer section **102**, a band pass filter section **103**, and a null signal detector section **105**. In Example 1, the device **100** further includes a null signal detector filter section **104** provided between the band pass filter section **103** and the null signal detector section **105**.

The frequency transformer section **102** transforms a radio frequency signal input from the receiving antenna **101** into a signal having an intermediate frequency $f_C$. The band pass filter section **103** restricts the band of the intermediate frequency signal. The band pass filter section **103** is typically a SAW filter. The band pass filter section **103** extracts signals, which have a bandwidth $f_B$ around the intermediate frequency $f_C$, including a plurality of modulated carrier waves. The null signal detector filter section **104** further restricts the band of the signal output from the band pass filter section **103**. The null signal detector filter section **104** includes, for example, a SAW filter. The null signal detector filter section **104** passes only signals which have a bandwidth $f_B$-$xf_B$ (where x is less than one and equal to or greater than zero) around the intermediate frequency $f_C$. The frequency characteristic of the null signal detector filter section **104** is shown in Figure **2A**. As shown in Figure **2A**, the output band having an output amplitude of more than zero is slightly narrower than 1.536 MHz. The null signal detector section **105** detects a null signal in the output signal of the null signal detector filter section **104**. The above-described blocks each have the same operation as the corresponding block shown in Figure **9**, except for the null signal detector filter section **104**.

The operation of the null signal detecting device of Example 1 will be described below. As shown in Figure **12A,** assume that there is an adjacent channel on the upper-frequency side of the desired channel. A radio frequency signal is received by the receiving antenna **101** and is transformed into a signal having an intermediate frequency band around a center frequency $f_C$ by the frequency transformer section **102**. The band of the intermediate frequency signal is restricted by the band pass filter section **103** having the frequency characteristic shown in Figure **11**.

As a result, a signal at point B in Figure **1** is as shown in Figure **13** where signal components of the adjacent channel remain. The output signal of the band pass filter section **103** is then input into the null signal detector filter section **104** which restricts the pass band to a band having a narrower frequency characteristic than that of the band of each channel. For this reason, signals of the adjacent channel which exist outside the pass band thereof are attenuated. A signal at point C in Figure **1** includes more signals of the desired channel than those of the adjacent channel. The signal at point C is as shown in Figure **2B**.

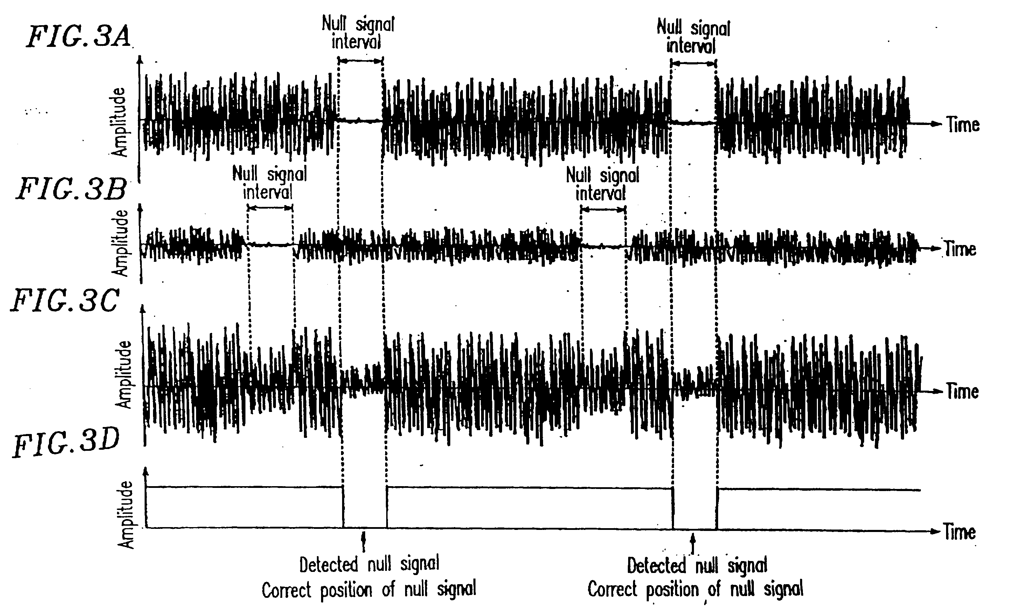

Figures **3A** to **3D** each show a relationship between the amplitude and time of the desired channel and/or an adjacent channel at point C in Figure **1**. Figure **3A** shows the desired channel alone. Figure **3B** shows the adjacent channel alone. Figure **3C** shows a composite wave of the desired channel and the adjacent channel. As shown in Figure **3C**, there is an interval having a small amplitude, corresponding to the null signal interval of the desired channel. When the null signal detector section **105** receives a signal output from the null signal detector filter section **104**, the null signal detector section **105** obtains the envelope of the amplitude of the signal, thereby detecting the null signal of the desired channel at a correct position as shown in Figure **3D**. A signal at point C, which is the output signal of the null signal detector filter section **104**, represents the desired channel filtered such that the upper- and lower-frequency signal are attenuated. The signal amplitude of the adjacent channel is sufficiently attenuated as compared with that of the desired channel, thereby improving the accuracy of null signal detection.

Note that the output signal of the band pass filter section **103** is input into an orthogonal demodulator section (not shown) so as to be transformed into a baseband signal including an I signal and a Q signal. When modulation is performed with QPSK, the orthogonal demodulator section demodulates the input signal into a bit-stream of data in units of 2 bits in an imaginary vector coordinate system. A leading portion of a frame is extracted using the null signal obtained by the null signal detector section **105**. Data following the leading portion is reproduced by detecting a frame synchronizing signal from a bit-stream included in the extracted leading portion.

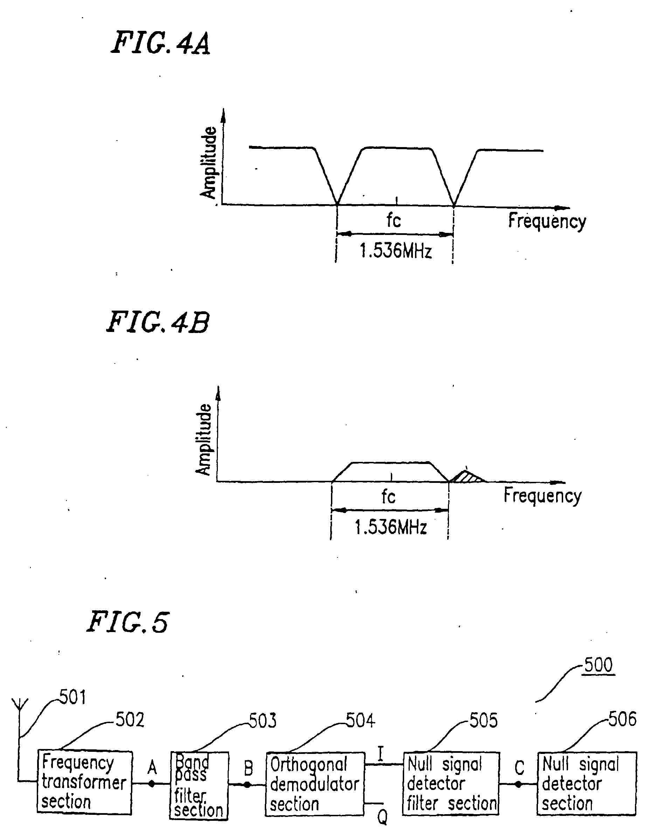

In Example 1, a SAW filter is used as a filter included in the band pass filter section **103**. The band pass filter section **103** may include any filter which can attenuate sufficiently the amplitude of a signal of the adjacent channel. A SAW filter is also used as a filter of the null signal detector filter section **104**. A notch filter which has a frequency characteristic shown in Figure **4A** may be, for example, used as the null signal detector filter section **104**. Specifically, such a filter has bands, in which the filter does not pass a signal, around $(f_C - f_B y/2)$ and around $(f_C + f_B y/2)$ where y is in a range between about 1.0 and about 1.3. In this case, a signal at point C in Figure **1** includes more signals of the desired channel than those of the adjacent channel, the spectrum of which is as shown in Figure **4B**. As a result, the null signal detector section **105** can detect a null signal with great accuracy.

In the description of Example 1, the adjacent channel exists on the upper-frequency side of the desired channel. When the adjacent channel exists on the lower-frequency side of the desired channel as shown in Figure **12B**, or when the adjacent channels exist on both the higher-and lower-frequency sides of the desired channel as shown in Figure **12C**, a signal at point C includes more signals of the desired channel than those of the adjacent channel by the use of the null signal detector filter section **104** which passes a signal only of the desired channel. As a result, the null signal detector section **105** can detect a null signal with great accuracy.

(Example 2)

A null signal detecting device according to Example 2 of this invention will be described below with reference to the accompanying drawings. Figure **5** is a block diagram showing a configuration of a null signal detecting device **500** according to Example 2 of this invention. The device **500** includes a receiving antenna **501**, a frequency transformer section **502**, a band pass filter section **503**, an orthogonal demodulator section **504**, a null signal detector filter section **505**, and a null signal detector section **506**. The receiving antenna **501**, frequency transformer section **502**, band pass filter section **503**, and null signal detector section **506** each have the same function as that of the corresponding blocks used in Example 1. The description of these blocks in Example 2 is therefore omitted.

The orthogonal demodulator section **504** receives a signal output from the band pass filter section **503** and transforms the signal into a modulated carrier wave. The resulting signal is then subjected to orthogonal demodulation so as to be transformed into a baseband signal including an I signal and a Q signal. The null signal detector filter section **505** is a low pass filter which has a pass band between $-(f_B/2 - xf_B/2)$ and $+(f_B/2 - xf_B/2)$ (where x is less than one and equal to or greater than zero) for a signal output from the orthogonal demodulator section **504**. In a digital information receiving device to which this invention is applied, the orthogonal demodulator section **504** is provided at the rear stage of the band pass filter section **503**, so that a null signal is detected from a signal output from the orthogonal demodulator section **504**.

The operation of the null signal detecting device **500** will be described below. Similar to Example 1, as shown in Figure **12A**, assume that there is the desired channel and the adjacent channel on the higher-frequency side of the desired channel. A radio frequency signal is received by the receiving antenna **501**, and is transformed into an intermediate frequency region around a center frequency $f_C$ by the frequency transformer section **502**. The band of the intermediate frequency signal is restricted by the band pass filter section **503** having a frequency characteristic shown in Figure **11**.

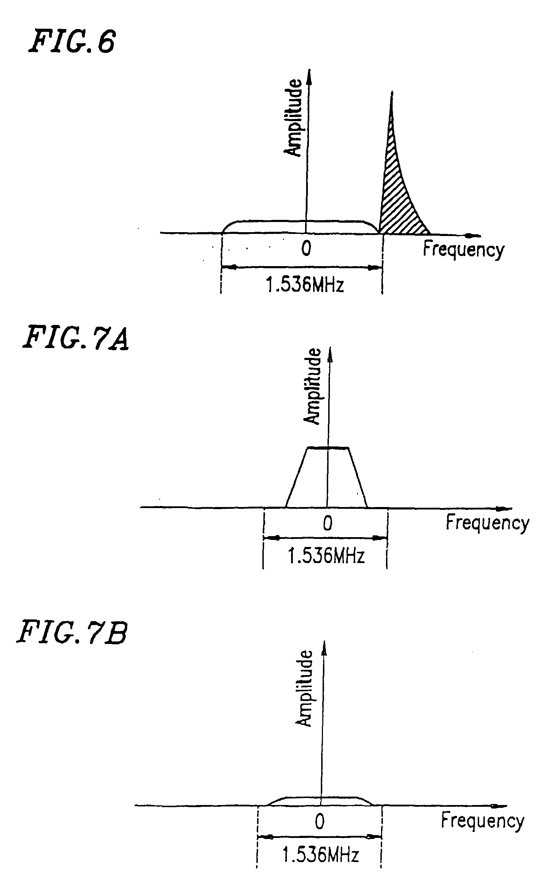

As a result, a signal at point B in Figure **5** is as shown in Figure **6**. A signal of the adjacent channel remains. The signal output from the band pass filter section **503** is then input to the orthogonal demodulator section **504** and subjected to orthogonal demodulation, i.e., the signal is transformed into a baseband signal including an I signal and a Q signal which are orthogonal.

Next, the I signal included in the output signal of the orthogonal demodulator section **504** is input to the null signal detector filter section **505**. As shown in Figure **7A,** the null signal detector filter section **505** has a pass band having a narrower frequency characteristic than that of the frequency band of the transmission channel. Therefore, a signal at point C in Figure **5** includes more signals of the desired channel than those of the adjacent channel. The resulting signal is as shown in Figure **7B**. The relationship between the amplitude and time of the combination of the desired channel and the adjacent channel is as shown in Figure **3C** where an interval having a low signal power is located where corresponds to a null signal of the desired channel. The signal output from the null signal detector filter section **505** is input to the null signal detector section **506** which in turn obtains the envelope of the amplitude of the signal to detect a correct null signal position.

As described above, when it is the baseband signal that is subjected to band restriction in the null signal detector filter section **505** which is a low pass filter, the null signal detecting device **500** can attenuate a signal of the adjacent channel with a more simple configuration than when a band pass filter is used.

In Example 2, the I signal of the output signals of the orthogonal demodulator section **504** is input to the null signal detector filter section **505**, but the Q signal may be used as the input signal to the null signal detector filter section **505** instead of the I signal. In this case, a null signal can be detected in a similar way.

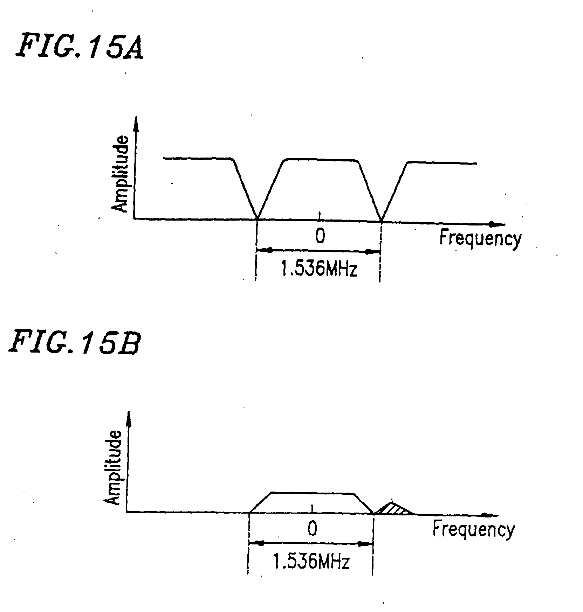

A notch filter which has a frequency characteristic shown in Figure **15A** may, for example, be used as the null signal detector filter section **104**. Specifically, such a filter has bands, in which the filter does not pass a signal, around $-f_B y/2$ and around $+f_B y/2$ where y is in a range between about 1.0 and about 1.3. In this case, a signal at point C in Figure 1 includes more signals of the desired channel than those of the adjacent channel, the spectrum of which is as shown in Figure **15B**. As a result, the null signal detector section **506** can detect a null signal with great accuracy.

As described above, in order to attenuate a signal of an adjacent channel, a filter which passes only part of a signal of the desired channel is provided at the front stage of a null signal detector section. This allows elimination of the signal of the adjacent channel which is responsible for erroneous detection of a null signal of the desire channel.

As described above, of signals which have been transformed into an intermediate frequency region or baseband region, the null signal detector filter section of this invention passes only a signal having part of the frequency band of the desired channel. When this null signal detector filter section is provided at the front stage of a null signal detector section, a signal of an adjacent channel can be attenuated or eliminated. Therefore, a signal of the desired channel which is included in an input to the null signal detector section is relatively large, thereby reducing erroneous detection of a null signal of the desired channel.

Furthermore, when a signal which is transformed into a baseband region using the orthogonal demodulator section is subjected to band restriction, the use of a low pass filter or a notch filter can lead to the above-described effects. Therefore, a filter including a smaller number of parts is available for the null signal detecting device of this invention.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

**Claims**

1. A null signal detecting device, wherein when digital information is transmitted via a plurality of frame signals, a null signal is inserted between each of the plurality of frame signals to identity each of the plurality of frame signals; the null signal has an amplitude smaller than that of each of the plurality of frame signals; the plurality of frame signals and the null signals are subjected to frequency division to generate a plurality of carrier waves; the plurality of carrier waves are modulated; the plurality of modulated carrier waves are transformed into an RF signal; the RF signal is transmitted as the digital information; and the null signal is detected by demodulating the RF signal,
    the device comprising:

    a frequency transformer section for transforming the RF signal into a signal having an intermediate frequency $f_C$;
    a band pass filter section for receiving an output signal of the frequency transformer section and extracting a signal having a frequency band width $f_B$ around the intermediate frequency $f_C$ such that the plurality of modulated carrier waves are included therein;
    a null signal detector filter section including a filter for subjecting an output signal of the band pass filter section to band restriction, the filter having a narrower bandwidth around the intermediate frequency $f_C$ than the bandwidth $f_B$; and
    a null signal detector section for detecting as a null signal an output signal of the null signal detector filter section which has an amplitude substantially smaller than the average amplitude of output signals of the null signal, detector filter section.

2. A null signal detecting device according to claim 1, wherein the null signal detector filter section has a bandwidth around an intermediate frequency $f_C$, wherein the bandwidth is sufficiently narrow that an adjacent channel is eliminated.

3. A null signal detecting device according to claim 1, wherein the null signal detector filter section includes a band pass filter which passes only an output signal of the frequency transformer section which has a bandwidth $f_B-xf_B$ (where x is equal to or greater than zero and less than one) around the intermediate frequency $f_C$.

4. A null signal detecting device according to claim 1, wherein the null signal detector filter section includes a notch filter which does not pass an output signal of the frequency transformer section which has a bandwidth around $(f_C - f_B y/2)$ and around $(f_C + f_B y/2)$ (where y is in a range between about 1.0 and about 1.3).

5. A null signal detecting device, wherein when digital information is transmitted via a plurality of frame signals, a null signal is inserted between each of the plurality of frame signals to identify each of the plurality of frame signals; the null signal has an amplitude smaller than that of each of the plurality of frame signals; the plurality of frame signals and the null signals are subjected to frequency division to generate a plurality of carrier waves; the plurality of carrier waves are modulated; the plurality of modulated carrier waves are transformed into an RF signal; the RF signal is transmitted as the digital information; and the null signal is detected by demodulating the RF signal,
   the device comprising:

   a frequency transformer section for transforming the RF signal into a signal having an intermediate frequency $f_C$;
   a band pass filter section for receiving an output signal of the frequency transformer section and extracting a signal having a frequency band width $f_B$ around the intermediate frequency $f_C$ such that the plurality of modulated carrier waves are included therein;
   an orthogonal demodulator section for receiving an output signal of the band pass filter section, transforming the output signal of the band pass filter section into the modulated carrier wave and transforming the modulated carrier wave into a baseband signal based on the phase of the modulated carrier wave;
   a null signal detector filter section including a filter for subjecting an output signal of the orthogonal modulator to band restriction, the filter having a narrower bandwidth than a bandwidth between $-f_B/2$ and $f_B/2$; and
   a null signal detector section for detecting as a null signal an output signal of the null signal detector filter section which has an amplitude substantially smaller of the average amplitude of output signals of the null signal detector filter section.

6. A null signal detecting device according to claim 5, wherein the null signal detector filter section has a bandwidth which is sufficiently narrow that an adjacent channel is eliminated.

7. A null signal detecting device according to claim 5, wherein the null signal detector filter section includes a low pass filter.

8. A null signal detecting device according to claim 5, wherein the null signal detector filter section includes a low pass filter which passes only an output signal of the frequency transformer section which has a bandwidth $f_B - x f_B$ (where x is equal to or greater than zero and less than one) around the intermediate frequency $f_C$.

9. A null signal detecting device according to claim 5, wherein the null signal detector filter section includes a notch filter which does not pass an output signal of the frequency transformer section which has a bandwidth around $(f_C - f_B y/2)$ and around $(f_C + f_B y/2)$ (where y is in a range between about 1.0 and about 1.3).

# FIG.1

# FIG.2A

# FIG.2B

EP 1 037 440 A2

*FIG.3A*

Null signal interval

Null signal interval

Amplitude

→ Time

*FIG.3B*

Null signal interval

Null signal interval

Amplitude

→ Time

*FIG.3C*

Amplitude

→ Time

*FIG.3D*

Amplitude

→ Time

Detected null signal
Correct position of null signal

Detected null signal
Correct position of null signal

## FIG.4A

## FIG.4B

## FIG.5

## FIG.6

Amplitude

0          Frequency

1.536MHz

## FIG.7A

Amplitude

0          Frequency

1.536MHz

## FIG.7B

Amplitude

0          Frequency

1.536MHz

## FIG.8A

Null signal interval

Null signal interval

Amplitude

Time

1 flame

1 flame

## FIG.8B

Amplitude

1.536MHz

Frequency

## FIG.8C

Amplitude

1.536MHz

Frequency

EP 1 037 440 A2

# FIG.9

```
       901
   Y  ╭
          902              903           904
       ╭              ╭              ╭
      ┌──────────┐  A ┌──────────┐  B ┌──────────┐
   │  │Frequency │    │Band pass │    │Null signal│
   └──│transformer│───│filter    │────│detector  │
      │section   │    │section   │    │section   │
      └──────────┘    └──────────┘    └──────────┘
```

*FIG.10A*

Amplitude · Frequency · $f_c$

*FIG.10B*

Amplitude · Frequency · $f_c$

*FIG.10C*

Amplitude · Time · Null signal interval · Null signal interval

## FIG.11

*FIG.12A*

*FIG.12B*

*FIG.12C*

## FIG.13

*FIG.14A*

Null signal interval

Null signal interval

Amplitude

*FIG.14B*

Null signal interval

Null signal interval

Amplitude

*FIG.14C*

Amplitude

*FIG.14D*

Amplitude

Miss detected null signal

Correct position of null signal

Miss detected null signal

Correct position of null signal

*FIG.15A*

*FIG.15B*